(19) Europäisches Patentamt

European Patent Office

Office européen des brevets

(11) EP 2 495 530 B1

# (12) FASCICULE DE BREVET EUROPEEN

(45) Date de publication et mention de la délivrance du brevet:
**16.04.2014 Bulletin 2014/16**

(51) Int Cl.:
**G01C 21/16** *(2006.01)*  **G05D 1/08** *(2006.01)*

(21) Numéro de dépôt: **12156798.6**

(22) Date de dépôt: **24.02.2012**

(54) **Procédé et système de détermination de l'attitude d'un aéronef par mesures accélérométriques multi-axes**

Verfahren und System zur Bestimmung der Fluglage eines Luftfahrzeugs mit Hilfe von mehrachsigen Beschleunigungsmessungen

Method and system for determining the attitude of an aircraft by multi-axial accelerometric measurements

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.03.2011 FR 1100643**

(43) Date de publication de la demande:
**05.09.2012 Bulletin 2012/36**

(73) Titulaire: **Thales**
**92200 Neuilly Sur Seine (FR)**

(72) Inventeurs:
 • **Revol, Marc**
  **26120 Upic (FR)**
 • **Mandle, Jacques**
  **07130 Saint Peray (FR)**
 • **Bibaut, Alain**
  **91430 Igny (FR)**
 • **Coatantiec, Jacques**
  **26210 Fauconnières (FR)**

(74) Mandataire: **Lucas, Laurent Jacques et al**
 **Marks & Clerk France**
 **Conseils en Propriété Industrielle**
 **Immeuble Visium**
 **22, Avenue Aristide Briand**
 **94117 Arcueil Cedex (FR)**

(56) Documents cités:
 **EP-A1- 0 621 482    FR-A1- 2 107 847**
 **GB-A- 2 146 776    US-A1- 2005 150 289**

 • **AKEILA E ET AL: "Direct gravity estimation and compensation in strapdown INS applications", 3RD INTERNATIONAL CONFERENCE ON SENSING TECHNOLOGY, 2008. ICST 2008., 30 novembre 2008 (2008-11-30), pages 218-223, XP031410295, IEEE, PISCATAWAY, NJ, USA ISBN: 978-1-4244-2176-3**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention a pour objet un procédé et un système de détermination de l'attitude d'un aéronef par mesures accélérométriques multi-axes. Le domaine de l'invention est celui de la navigation aérienne et concerne tout type d'aéronef, avec ou sans pilote.

L'invention se rapporte en particulier au domaine des systèmes inertiels pour l'aide à la navigation.

Les capteurs qui positionnent un aéronef par rapport à la masse d'air, appelés capteurs anémobaroclinométriques, délivrent des mesures fondamentales pour l'aéronef et sa sécurité. Classiquement, ces mesures concernent quatre grandeurs physiques : la pression totale, la pression statique, la température (totale ou statique) et l'incidence. A partir de telles mesures primaires, des paramètres de navigation élaborés sont construits comme par exemple, la vitesse conventionnelle de l'aéronef par rapport à l'air, l'altitude pression, l'incidence ou encore le nombre de Mach. En l'absence de ces paramètres, l'avion ne peut pas voler en sécurité. L'ensemble de ces paramètres est traité par une unité centrale, de type anémo-barométrique, généralement redondée qui constitue la voie opérationnelle ou primaire permettant de traiter l'ensemble des informations nécessaires à la navigation de l'aéronef.

Compte tenu du caractère fondamental des mesures anémo-barométriques pour la sécurité d'un aéronef, il est important de concevoir une voie de secours ou secondaire, permettant de pallier une éventuelle défaillance de la voie opérationnelle et/ou permettant d'assurer un contrôle de l'intégrité des mesures qu'elle réalise.

Les centrales anémo-barométriques, qui comportent notamment des sondes de Pitot couplées à des sondes de pression statique, présentent l'avantage de pouvoir fournir directement une mesure du module de la vitesse conventionnelle de l'aéronef par rapport à l'air. Cette information est critique pour le pilotage de l'aéronef. En effet, si cette vitesse est trop élevée, l'aéronef peut être endommagé, si elle est trop faible, il peut décrocher et tomber. En associant cette mesure à une estimation du cap (réalisée par exemple par un magnétomètre), il est possible de déterminer le vecteur vitesse de l'aéronef par rapport à l'air. La vitesse réelle de déplacement résulte ensuite de la composition de la vitesse de l'aéronef par rapport à l'air avec la vitesse du vent moyen.

Pour assurer une sécurisation des informations délivrées par une centrale anémo-barométrique, il est important de mettre en oeuvre un système de secours qui doit permettre un entretien de l'attitude de l'aéronef lorsque le système opérationnel est défaillant. Les systèmes de secours usuels, mettent en oeuvre à cet effet des méthodes identiques à celles utilisées par la voie opérationnelle, c'est-à-dire basées sur l'utilisation de sondes Pitot et de sondes de pression statique.

Ainsi, les mesures réalisées par la voie de secours ne sont pas indépendantes de celles délivrées par la voie opérationnelle puisqu'elles sont exposées à des modes de défaillance communs.

Pour résoudre ce problème, il convient donc de mettre en oeuvre un système de secours qui utilise des moyens de mesure différents de ceux de la voie opérationnelle afin d'assurer un contrôle d'intégrité indépendant et de diminuer la probabilité de défaillance simultanée des deux voies.

Une solution au problème précité consiste à utiliser des signaux de radio-navigation par satellites, encore appelés signaux GNSS « Global Navigation Satellite System », pour la mesure de route et d'attitude de l'aéronef.

Le brevet français n° 01 16561 du demandeur portant sur un « procédé d'amélioration de la détermination de l'attitude d'un véhicule à l'aide de signaux de radionavigation par satellite » décrit l'utilisation de signaux de radio-navigation par satellites pour la mesure d'attitude et de cap porteur mais restreint à la mise en oeuvre d'au moins deux antennes distantes de plusieurs longueurs d'onde.

Cette solution présente l'inconvénient de nécessiter au moins deux antennes et d'augmenter l'encombrement sur l'aéronef. De plus elle entraine des difficultés de synchronisation des deux antennes auxquelles s'ajoutent encore des problèmes d'ambiguïté sur la phase mesurée à partir des deux antennes distantes.

Une limitation générale à l'utilisation des signaux de radio-navigation par satellite pour la navigation aérienne réside dans la vulnérabilité des récepteurs de radio-navigation par satellite vis-à-vis des perturbations diverses liées à l'environnement de propagation, telles les interférences, multi-trajets ou problèmes de brouillage. Ces perturbations sont susceptibles d'entraîner des biais de mesures importants, des sauts de phase voire des décrochages des boucles de poursuite de phase rendant ainsi momentanément indisponible le service.

Une autre solution consiste à utiliser un système inertiel classiquement composé de trois accéléromètres et trois gyromètres pour déterminer les trois angles d'attitude.

Cette solution présente un inconvénient en termes de coûts d'équipements lié à l'utilisation de plusieurs gyromètres. En effet un gyromètre, par exemple un gyromètre laser, a un coût de l'ordre de plusieurs centaines de fois l'ordre de grandeur du prix d'un accéléromètre. De plus un gyromètre est en général plus volumineux et plus consommateur d'énergie qu'un accéléromètre ce qui entraine, pour une centrale inertielle classique, un encombrement important.

On connait également d'autres solutions décrites dans les demandes de brevet publiées sous les numéros GB 2146 776, FR 2107847, EP 0621482 ainsi que dans le document « Akeila E et al : Direct gravity estimation and compensation in strapdown INS applications, Sensing Technology, 2008, ICST 2008, 3rd international conference on, IEEE, Piscataway, NJ, USA, 30 novembre 2008 ».

**EP 2 495 530 B1**

Aucun de ces documents ne divulgue cependant de méthode permettant de compenser les erreurs de calibrage des accéléromètres d'un système inertiel par correction de la dérivée seconde du ou des angles d'attitude mesurés.

Afin de supprimer les limitations des solutions de navigation de secours existantes, l'invention a pour objectif de concevoir un système inertiel, permettant le calcul de l'attitude d'un aéronef, à faible encombrement et faible coût basé principalement sur l'utilisation d'accéléromètres.

Un avantage de l'invention réside dans le remplacement de tout ou partie des gyromètres d'une centrale inertielle classique par des accéléromètres en vue de la réalisation d'un système de navigation de secours.

L'invention a ainsi pour objet un procédé de détermination, par un système inertiel, d'une mesure de l'attitude d'un aéronef consistant au moins à déterminer l'angle de tangage $\theta$ et/ou l'angle de cap $\psi$ et/ou l'angle de roulis $\varphi$ dudit aéronef, chacun desdits angles d'attitude étant déterminé par double intégration successive de leur dérivée seconde, ladite dérivée seconde étant déterminée comme la différence entre les mesures d'accélérations délivrées par deux accéléromètres appariés divisée par la somme des distances respectives entre lesdits accéléromètres et le centre de gravité G dudit système inertiel, le couple d'accéléromètres utilisé pour la détermination de l'angle de tangage $\theta$ étant disposé de part et d'autre du centre de gravité G le long d'un axe x sensiblement confondu avec l'axe longitudinal de l'aéronef, le couple d'accéléromètres utilisé pour la détermination de l'angle de cap $\psi$ étant disposé de part et d'autre du centre de gravité G le long d'un axe y sensiblement confondu avec l'axe transversal de l'aéronef, le couple d'accéléromètres utilisé pour la détermination de l'angle de cap $\psi$ étant disposé de part et d'autre du centre de gravité G le long d'un axe y sensiblement confondu avec l'axe transversal de l'aéronef, le couple d'accéléromètres utilisé pour la détermination de l'angle de roulis $\varphi$ étant disposé de part et d'autre du centre de gravité G le long d'un axe z vertical perpendiculaire au plan formé par les axes x et y, ledit procédé consistant en outre à compenser les erreurs de calibrage des dits accéléromètres en corrigeant la dérivée seconde du/des angle(s) d'attitude $\theta$, $\psi$, $\varphi$, par un biais différentiel $\overline{\Delta}_{x21}$ divisé par la somme des distances respectives entre les accéléromètres et le centre de gravité G dudit système inertiel, ledit biais différentiel $\overline{\Delta}_{x21}$ étant déterminé à partir de l'intégration, sur une durée T donnée, de la différence entre d'une part, la différence entre les mesures d'accélération délivrées par le couple d'accéléromètres appariés et d'autre part, une estimée non biaisée de la dérivée seconde de l'angle d'attitude $\theta$, $\psi$, $\varphi$ que multiplie la somme desdites distances.

Dans une variante de réalisation de l'invention, la mesure de l'attitude de l'aéronef est utilisée comme information de secours en support d'un système de navigation de référence.

Dans une variante de réalisation de l'invention, ledit système de navigation de référence délivre l'estimée non biaisée de la dérivée seconde du ou des angles d'attitude.

Dans une variante de réalisation, le procédé selon l'invention consiste en outre à corriger les dérives à long terme impactant lesdites mesures d'attitude en déterminant au moins une compensation $\delta_\theta$ de l'angle de tangage et/ou une compensation $\delta\varphi$ de l'angle de roulis, lesdites compensations $\delta_\theta, \delta_\varphi$ étant déterminées à partir de la comparaison du vecteur *B*, orthogonal au plan de l'assiette défini par les angles de tangage $\theta$ et de roulis $\varphi$ et du vecteur accélération $\vec{g}$ de l'aéronef soumis à la gravité terrestre, ledit vecteur $\vec{g}$ étant déterminé comme l'accélération gravimétrique de l'aéronef en son centre de gravité G, à partir de la moyenne des mesures d'accélérations délivrées par deux accéléromètres appariés, les distances respectives entre deux accéléromètres d'un même couple et le centre de gravité G dudit système inertiel étant fixées égales entre elles.

Dans une variante de réalisation, le procédé selon l'invention consiste en outre à compenser ledit vecteur accélération $\vec{g}$ par une estimée $\vec{\gamma}_d$ de l'accélération dynamique de l'aéronef.

L'invention a également pour objet un système de navigation inertiel, embarqué sur un aéronef, **caractérisé en ce qu'**il comporte au moins un couple d'accéléromètres appariés disposés le long d'un axe x sensiblement confondu avec l'axe longitudinal dudit aéronef, de part et d'autre du centre de gravité G dudit système inertiel et à une distance respective $x_1, x_2$ de celui-ci, les axes sensibles desdits accéléromètres étant disposés sensiblement parallèles entre eux et perpendiculaires à l'axe x, ledit système inertiel comportant en outre des moyens de calcul reliés audit premier couple et adaptés à mettre en oeuvre le procédé de détermination de l'angle de tangage $\theta$ dudit aéronef selon l'invention.

Dans une variante de réalisation, le système de navigation inertiel selon l'invention comporte en outre un deuxième couple d'accéléromètres appariés disposés le long d'un axe z vertical et perpendiculaire, au point G, à l'axe x, de part et d'autre dudit point G et à une distance respective $z_1, z_2$ de celui-ci, les axes sensibles desdits accéléromètres étant disposés sensiblement parallèles entre eux et perpendiculaires à l'axe z, ledit système inertiel comportant en outre des moyens de calcul reliés audit deuxième couple et adaptés à mettre en oeuvre le procédé de détermination de l'angle de roulis $\varphi$ dudit aéronef selon l'invention.

Dans une variante de réalisation, le système de navigation inertiel selon l'invention comporte en outre un gyromètre disposé sensiblement au point G et orienté selon un axe z vertical et perpendiculaire, au point G, à l'axe x, ledit gyromètre étant adapté à délivrer une estimée de l'angle de cap $\psi$ dudit aéronef.

Dans une variante de réalisation, le système de navigation inertiel selon l'invention comporte en outre un troisième couple d'accéléromètres appariés disposés le long d'un axe y sensiblement confondu avec l'axe transversal dudit aéronef et perpendiculaire au point G, à l'axe x, de part et d'autre dudit point G et à une distance respective $y_1, y_2$

3

de celui-ci, les axes sensibles desdits accéléromètres étant disposés sensiblement parallèles entre eux et perpendiculaires à l'axe y, ledit système inertiel comportant en outre des moyens de calcul reliés au moins audit troisième couple et adaptés à mettre en oeuvre le procédé de détermination des angles d'attitude dudit aéronef selon l'invention.

Dans une variante de réalisation, le système de navigation inertiel selon l'invention constitue un système de navigation de secours en support d'un système de navigation primaire embarqué sur ledit aéronef.

D'autres caractéristiques et avantages de l'invention apparaîtront à l'aide de la description qui suit faite en regard des dessins annexés qui représentent :

- la figure 1, un synoptique schématisant le système selon l'invention dans un premier mode de réalisation,
- la figure 2, un synoptique schématisant le système selon l'invention dans un second mode de réalisation.
- La figure 3, un synoptique illustrant les traitements mis en oeuvre par l'invention dans ses différentes variantes de réalisation,

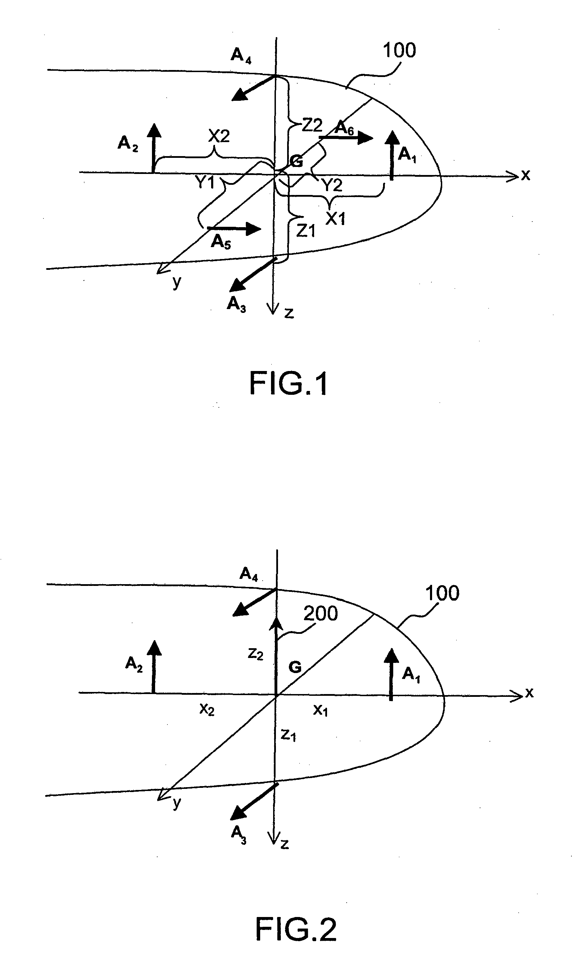

La figure 1 schématise, sur un synoptique, le système inertiel selon l'invention dans un premier mode de réalisation. Celui-ci est composé de trois couples d'accéléromètres (A1,A2), (A3,A4), (A5,A6) mono-axes disposés sur un aéronef 100 dans un repère fixe {x,y,z} par rapport à cet aéronef. Sur la figure 1, les six accéléromètres sont représentés chacun par une flèche orientée dans la direction de leurs axes sensibles respectifs, c'est-à-dire la direction dans laquelle l'accélération de l'aéronef est mesurée. L'axe x est sensiblement confondu avec l'axe longitudinal de l'aéronef 100, l'axe y est sensiblement confondu avec l'axe transversal de l'aéronef 100 et l'axe z est un axe vertical perpendiculaire au plan formé par les axes y et z.

Le point G représenté sur la figure 1 est situé approximativement au centre de gravité du système inertiel selon l'invention. Le premier couple d'accéléromètres (A1,A2) est disposé de part et d'autre du point G le long de l'axe x et à une distance de ce point respectivement égale à x1 et x2. La distance x1 représente le bras de levier entre l'axe de l'accéléromètre A1 et l'axe z du repère. La distance x2 représente le bras de levier entre l'axe de l'accéléromètre A2 et l'axe z du repère. Les axes sensibles des deux accéléromètres appariés (A1,A2) sont disposés parallèlement entre eux et à l'axe z. Ils sont ainsi situés dans le plan xGz, orthogonalement à l'axe x. Le premier couple d'accéléromètres (A1,A2) est utilisé pour déterminer l'angle de tangage $\theta$ de l'aéronef 100.

Le deuxième couple d'accéléromètres (A3,A4) est disposé de part et d'autre du point G le long de l'axe z et à une distance de ce point respectivement égale à z1 et z2. Les axes sensibles des deux accéléromètres appariés (A3,A4) sont disposés parallèlement entre eux et à l'axe y. Ils sont ainsi situés dans le plan yGz, orthogonalement à l'axe z. Le deuxième couple d'accéléromètres (A3,A4) est utilisé pour déterminer l'angle de roulis $\varphi$ de l'aéronef 100.

Le troisième couple d'accéléromètres (A5,A6) est disposé de part et d'autre du point G le long de l'axe y et à une distance de ce point respectivement égale à y1 et y2. Les axes sensibles des deux accéléromètres appariés (A5,A6) sont disposés parallèlement entre eux et à l'axe x. Ils sont ainsi situés dans le plan xGy, orthogonalement à l'axe y. Le troisième couple d'accéléromètres (A5,A6) est utilisé pour déterminer l'angle de cap $\psi$ de l'aéronef 100.

L'accélération mesurée respectivement par les accéléromètres A1 et A2 peut être exprimée à l'aide des relations suivantes :

$$\gamma_{X_1} = \gamma_{d_z} - g.\cos(\theta)\cos(\varphi) - x_1.\ddot{\theta} \qquad (1)$$
$$\gamma_{X_2} = \gamma_{d_z} - g.\cos(\theta)\cos(\varphi) + x_2.\ddot{\theta}$$

$\theta$ est l'angle de tangage de l'aéronef 100,
$\varphi$ est l'angle de roulis de l'aéronef 100,
g représente la gravité terrestre,
$\gamma\,d_z$ représente la composante axiale, selon l'axe z, de l'accélération dynamique au centre de gravité du porteur,
$x_1$ est la valeur du bras de levier entre l'axe de l'accéléromètre A1 et l'axe z,
$x_2$ est la valeur du bras de levier entre l'axe de l'accéléromètre A2 et l'axe z.

A partir des relations (1), on en déduit une estimée de la dérivée seconde de l'angle de tangage en fonction des mesures d'accélérations délivrées par les capteurs A1 et A2 et des bras de levier $x_1$ et $x_2$.

$$\ddot{\theta} = \frac{\gamma_{X_2} - \gamma_{X_1}}{x_1 + x_2} \qquad (2)$$

La dérivée seconde de l'angle de tangage représente une composante de l'estimée de la contribution tangentielle de l'accélération dynamique angulaire. En effectuant la différence entre les mesures délivrées par les deux accéléromètres appariés A1,A2, la contribution axiale de l'accélération dynamique disparait.

De façon similaire, il est possible de déterminer une estimée de la dérivée seconde de l'angle de roulis en fonction des mesures d'accélérations délivrées par les capteurs A3 et A4 et des bras de levier $z_1$ et $z_2$ entre les axes desdits capteurs et l'axe y.

Les relations (3) donnent l'expression desdites mesures d'accélérations en fonction de la composante axiale $\gamma_{d_y}$, selon l'axe y, de l'accélération dynamique et des angles de tangage et de roulis.

$$\gamma_{Z_1} = \gamma_{d_Y} + g.\cos(\theta)\sin(\varphi) - z_1.\ddot{\varphi}$$
$$\gamma_{Z_2} = \gamma_{d_Y} + g.\cos(\theta).\sin(\varphi) + z_2.\ddot{\varphi} \quad (3)$$

En différenciant les deux mesures, les termes communs s'éliminent et il est possible d'en déduire une estimée de la dérivée seconde de l'angle de roulis :

$$\ddot{\varphi} = \frac{\gamma_{Z_1} - \gamma_{Z_2}}{z_1 + z_2} \quad (4)$$

Egalement, il est possible de déterminer une estimée de la dérive seconde de l'angle de cap en fonction des mesures d'accélérations délivrées par les capteurs A5 et A6 et des bras de levier $y_1$ et $y_2$ entre les axes desdits capteurs et l'axe x.

Les relations (5) donnent l'expression desdites mesures d'accélérations en fonction de la composante axiale $\gamma_{d_x}$, selon l'axe x, de l'accélération dynamique et des angles de tangage et de cap.

$$\gamma_{Y_1} = \gamma_{d_x} - g.\sin(\theta) - y_1.\ddot{\psi}$$
$$\gamma_{Y_2} = \gamma_{d_x} - g.\sin(\theta) + y_2.\ddot{\psi} \quad (5)$$

En différenciant les deux mesures, les termes communs s'éliminent et il est possible d'en déduire une estimée de la dérivée seconde de l'angle de cap :

$$\ddot{\psi} = \frac{\gamma_{Y_1} - \gamma_{Y_2}}{y_1 + y_2} \quad (6)$$

A partir des dérivées seconde des angles d'attitude fournies par les relations (2), (4) et (6) et en ayant la connaissance de la valeur initiale des angles d'attitude et de leurs vitesses angulaires, il est possible, par intégration successive, d'en déduire les valeurs courantes des angles d'attitude. Si on note $\vec{\ddot{\Omega}}_a(t) = \begin{pmatrix} \ddot{\theta} \\ \ddot{\varphi} \\ \ddot{\psi} \end{pmatrix}$ , le vecteur des dérivées seconde des angles d'attitude de l'aéronef 100, une première intégration permet de déterminer le vecteur des vitesses angulaires d'attitude, également connu de l'Homme du métier, spécialiste des systèmes de navigation aérienne, sous la notation {p,q,r} :

$$\vec{\dot{\Omega}}_a(t) = \vec{\dot{\Omega}}_a(t_0) + \int_0^t \vec{\ddot{\Omega}}_a(u)du = \frac{1}{\Delta t}\begin{Bmatrix} p \\ q \\ r \end{Bmatrix}$$

De façon similaire, une seconde intégration permet de déterminer le vecteur des angles d'attitude :

$$\vec{\Omega}_a(t) = \vec{\Omega}_a(t_0) + \int_0^t \vec{\dot{\Omega}}_a(u)du$$

Le système inertiel selon l'invention est notamment destiné à être utilisé par une voie de navigation de secours. A ce titre, les valeurs initiales des angles d'attitude $\vec{\Omega}_a(t_0)$ et de leurs vitesses angulaires $\dot{\Omega}_a(t_0)$ sont fournies par un système de navigation primaire.

La figure 2 schématise, sur un synoptique, une variante de réalisation du système inertiel selon l'invention. Dans cette variante, le troisième couple d'accéléromètres (A5,A6), servant à la détermination de l'angle de cap, est remplacé par un gyromètre 200 dont l'axe de rotation est confondu avec l'axe z du repère fixe par rapport à l'aéronef 100. Le gyromètre 200 délivre une estimée de la vitesse angulaire selon l'axe z qui permet d'obtenir, après intégration, une estimée de l'angle de cap. Le gyromètre 200 peut également être remplacé par un gyroscope qui délivre directement une estimée de l'angle de cap. L'utilisation d'un gyromètre en remplacement du troisième couple d'accéléromètres (A5,A6) permet de limiter l'encombrement sur l'aéronef.

Dans une autre variante de réalisation de l'invention, une compensation du biais impactant les mesures délivrées par les accéléromètres est réalisée. La différence de sensibilité des accéléromètres ainsi que l'incertitude d'alignement de leurs axes se traduisent globalement par un biais différentiel entre les mesures d'accélérations délivrées par chaque couple d'accéléromètres. Ce biais impacte ainsi la mesure de la dérivée seconde des angles d'attitude puis se propage lors des deux intégrations successives pour aboutir à une erreur angulaire sur les angles d'attitude.

En supposant qu'un système inertiel de référence est disponible pour la voie principale de mesure et que ce système délivre une estimation non biaisée des angles d'attitude et de leurs dérivées seconde, il est possible de déterminer et corriger le biais impactant les mesures d'accélérations délivrées par le système selon l'invention.

Les mesures délivrées par le premier couple d'accéléromètres (A1,A2) peuvent être exprimées, en tenant compte de l'impact d'un biais de mesure $\Delta_{x1}(t)$ pour l'accéléromètre A1 et d'un biais de mesure $A_{x2}(t)$ pour l'accéléromètre A2, à l'aide des relations (7) suivantes.

$$\gamma_{x_1}(t) = \gamma_{d_z}(t) - g.\cos(\theta(t))\cos(\varphi(t)) - x_1.\ddot{\theta}(t) + \Delta_{x_1}(t) \quad (7)$$
$$\gamma_{x_2}(t) = \gamma_{d_z}(t) - g.\cos(\theta(t))\cos(\varphi(t)) + x_2.\ddot{\theta}(t) + \Delta_{x_2}(t)$$

A partir d'une estimée non biaisée de l'angle de tangage $\hat{\theta}(t)$ et de sa dérivée seconde $\hat{\ddot{\theta}}$ fournies par exemple par une centrale inertielle de référence, on en déduit l'expression des biais de mesure à l'aide des relations suivantes.

$$\Delta_{x_1}(t) = \gamma_{x_1}(t) - \gamma_{d_z}(t) + g.\cos(\theta(t))\cos(\varphi(t)) + x_1.\ddot{\theta}(t) \quad (8)$$
$$\Delta_{x_2}(t) = \gamma_{x_2}(t) - \gamma_{d_z}(t) + g.\cos(\theta(t))\cos(\varphi(t)) - x_2.\ddot{\theta}(t)$$

On calcule ensuite le biais différentiel instantané entre les mesures d'accélération des deux capteurs A1,A2 :

$$\Delta_{x_2}(t) - \Delta_{x_1}(t) = \gamma_{x_2}(t) - \gamma_{x_1}(t) - (x_2 + x_1).\ddot{\theta}(t) \quad (9)$$

Enfin, le biais différentiel instantané est moyenné sur une durée donnée T.

$$\overline{\Delta}_{x_{21}} = \frac{1}{T}\int_0^T \left(\Delta_{x_2}(t) - \Delta_{x_1}(t)\right)dt = \frac{1}{T}\int_0^T \left(\gamma_{x_2}(t) - \gamma_{x_1}(t) - (x_2 + x_1).\ddot{\hat{\theta}}(t)\right)dt \quad (10)$$

Le biais différentiel moyen se traduit par une erreur sur la dérivée seconde de l'angle de tangage qui est donnée par la relation :

$$\ddot{\delta\theta} = \frac{\overline{\Delta}_{x_{21}}}{x_1 + x_2} \quad (11)$$

L'estimée de la dérivée seconde de l'angle de tangage déterminée à l'aide de la relation (2) est compensée de l'erreur $\ddot{\vec{\delta\theta}}$.

La compensation des biais de mesure sur les angles de roulis et de cap est déterminée de la même façon à partir du calcul du biais différentiel instantané puis moyen entre les couples d'accéléromètres (A3,A4) et (A5,A6).

Un avantage de la méthode d'auto-calibration selon l'invention réside dans le fait de bénéficier des mesures d'attitude du système de navigation principal pour réaliser la calibration des erreurs des accéléromètres du système de secours selon l'invention. Contrairement aux solutions de calibration connues qui sont le plus souvent basées sur un calcul complexe utilisant un filtre de Kalman pour compenser en permanence les erreurs de mesures, la présente invention propose une solution moins complexe et qui peut être mise en oeuvre à un rythme plus lent, directement dépendant de la durée d'intégration T.

A titre d'exemple, une application numérique illustrant la méthode d'auto calibration selon l'invention est détaillée ci après. En supposant que les accéléromètres utilisés délivrent des mesures entachées d'un bruit de mesure de 1 mg, alors la durée d'intégration minimum pour atteindre une précision d'estimation du biais différentiel $\overline{\Delta}_{x21}$ de 0,1 mg est de 100 secondes.

Dans le cas simple d'un avion qui présente un mouvement rectiligne uniforme de vitesse égale à 1000 km/h et de position initiale angulaire nulle, l'accélération absolue mesurée suivant la direction considérée sera donc nulle à une erreur $\ddot{\vec{\delta\Omega}}_a$ près.

Cette erreur de biais $\ddot{\vec{\delta\Omega}}_a$ va entrainer après la première intégration, une erreur à l'instant T sur la vitesse angulaire de l'avion, telle que :

$$\dot{\vec{\Omega}}_a(T) = \dot{\vec{\Omega}}_a(t_0) + \int_0^{t_0+T} \ddot{\vec{\delta\Omega}}_a du = \dot{\vec{\Omega}}_a(t_0) + \ddot{\vec{\delta\Omega}}_a.T$$

De même, la seconde intégration va propager cette erreur de biais sur le calcul des angles d'attitude :

$$\vec{\Omega}_a(T) = \vec{\Omega}_a(t_0) + \int_0^{t_0+T} \dot{\vec{\Omega}}_a(u)du = \vec{\Omega}_a(t_0) + \int_0^{t_0+T} (\dot{\vec{\Omega}}_a(t_0) + \ddot{\vec{\delta\Omega}}_a.u)du$$

$$\vec{\Omega}_a(T) = \vec{\Omega}_a(t_0) + \dot{\vec{\Omega}}_a(t_0).T + \frac{1}{2}\ddot{\vec{\delta\Omega}}_a.T^2$$

Ainsi, l'erreur de biais impactant la mesure des angles d'attitude est de l'ordre de $\frac{1}{2}\ddot{\vec{\delta\Omega}}_a.T^2$. Elle se propage de manière quadratique avec le temps. A titre d'exemple, une erreur de biais sur les mesures accélérométriques de l'ordre de $1\times10^{-4}$ m.s$^{-2}$, supposée identique pour tous les capteurs, pour une distance de bras de levier entre deux accéléromètres appariés de l'ordre de 1 mètre induit une erreur angulaire pour l'avion de l'ordre de 0,18 radians ou 10° au bout d'une minute. Cette même erreur se réduit à 0,018 radians ou 1° si les accéléromètres appariés sont disposés à 10 mètres les uns des autres. Cet exemple numérique illustre l'impact de la valeur du bras de levier entre accéléromètres d'un même couple sur les performances finales de mesure d'attitude. Plus celle-ci est importante, meilleure est la précision de l'estimation finale.

L'invention est à présent décrite dans un autre mode de réalisation permettant de compenser, en sus des biais de mesure impactant les accéléromètres, les dérives à long terme sur les estimées des angles d'attitude.

De telles dérives peuvent s'avérer trop contraignantes pour un système de navigation de secours destiné à servir de relais en cas de défaillance du système principal. Pour pallier cet inconvénient, il est proposé un mode de réalisation particulier de l'invention permettant d'assurer la stabilité à long terme des mesures des angles d'attitude.

L'accélération gravimétrique correspondant à la projection sur l'axe vertical de l'accélération dynamique est déterminée à partir de la sommation des couples de mesures délivrés par les accéléromètres appariés et comparée à la gravité locale g pour en déduire une estimée des erreurs de dérive impactant les angles d'attitude.

Deux cas de figure sont envisagés, dans un premier cas, la vitesse de l'aéronef est supposée constante et l'accélération estimée du porteur par sommation des couples de mesures est directement comparable à la gravité locale ; dans un second cas, la vitesse de l'aéronef est supposée variable et il est nécessaire de compenser, en tout ou partie, la contribution liée à l'accélération dynamique axiale selon l'axe x (axe de direction de l'aéronef) et éventuellement les axes y et z.

Les erreurs de dérive angulaire sont ensuite utilisées pour recaler les mesures angulaires déterminées par différentiation des mesures données par les couples d'accéléromètres appariés.

A partir des relations (7), il est possible de déterminer une autre estimation de l'accélération axiale de l'aéronef (projetée sur l'axe vertical z) en réalisant la moyenne des mesures fournies par les deux accéléromètres (A1,A2). En particulier en imposant des valeurs égales $x_1 = x_2$ pour les deux bras de levier, on en déduit l'expression (12) :

$$\gamma_z = \frac{1}{2}\left(\gamma_{X_1} + \gamma_{X_2}\right) = \gamma_{d_z} - g.\cos(\theta).\cos(\varphi) + \frac{1}{2}\left(\Delta_{X_1} + \Delta_{X_2}\right) \quad (12)$$

De façon similaire, en imposant des valeurs égales pour les bras de levier de chaque couple d'accéléromètres appariés, $y_1 = y_2$ et $z_1 = z_2$, les projections sur les axes x et y de l'accélération de l'aéronef sont déterminées à l'aide des relations (13) et (14).

$$\gamma_x = \frac{1}{2}\left(\gamma_{Y_1} + \gamma_{Y_2}\right) = \gamma_{d_x} - g.\sin(\theta) + \frac{1}{2}\left(\Delta_{Y_1} + \Delta_{Y_2}\right) \quad (13)$$

$$\gamma_y = \frac{1}{2}\left(\gamma_{Z_1} + \gamma_{Z_2}\right) = \gamma_{d_y} + g.\sin(\varphi).\cos(\theta) + \frac{1}{2}\left(\Delta_{Z_1} + \Delta_{Z_2}\right) \quad (14)$$

En considérant que l'accélération $\vec{\gamma} = (\gamma_x, \gamma_y, \gamma_z)$ de l'aéronef en son centre de gravité G est provoquée uniquement par la gravité terrestre $\vec{g}$, c'est-à-dire que soit la vitesse de l'aéronef est constante, soit l'accélération dynamique axiale $\vec{\gamma_d}$ est déterminée, par ailleurs, par des moyens externes à l'invention, par exemple des mesures anémométriques, et soustraite à l'accélération $\vec{\gamma}$ mesurée, on en déduit une estimée des composantes axiales de la gravité terrestre à l'aide des relations (15).

$$\hat{g}_x = \gamma_x - \gamma_{d_x} = g.\sin(\theta) + \frac{1}{2}\left(\Delta_{Y_1} + \Delta_{Y_2}\right)$$

$$\hat{g}_y = \gamma_y - \gamma_{d_y} = g.\sin(\varphi).\cos(\theta) + \frac{1}{2}\left(\Delta_{Z_1} + \Delta_{Z_2}\right) \quad (15)$$

$$\hat{g}_z = \gamma_z - \gamma_{d_z} = g.\cos(\varphi).\cos(\theta) + \frac{1}{2}\left(\Delta_{X_1} + \Delta_{X_2}\right)$$

En définissant le vecteur $\vec{B}$ orthogonal au plan de l'assiette défini par les angles d'attitude $(\theta, \varphi)$, $\vec{B} =$

(-sin(θ),cos(θ)sin(φ),cos(θ)), alors il est possible d'estimer l'erreur impactant les mesures sur les angles d'attitude fournies par les voies différentielles en comparant les vecteurs $\vec{B}$ et $\vec{g}$ qui sont sensés représenter la même direction. Cette comparaison est, par exemple, réalisée en calculant le produit vectoriel normé desdits vecteurs.

$$(\delta_\varphi, \delta_\theta, *) = \vec{B} \wedge \frac{\vec{g}}{\|\vec{g}\|} = (-\sin(\theta), \cos(\theta)\sin(\varphi), \cos(\theta)\cos(\varphi)) \wedge (g_x, g_y, g_z) / g \quad (16)$$

Ainsi, l'erreur angulaire sur l'axe de roulis est donnée par la relation (17)

$$\delta_\varphi = \cos(\theta)\sin(\varphi) * \frac{g_z}{g} - \cos(\theta)\cos(\varphi) * \frac{g_y}{g} \quad (17)$$

L'erreur angulaire sur l'axe de tangage est donnée par la relation (18)

$$\delta_\theta = \sin(\theta) * \frac{g_z}{g} - \cos(\theta)\cos(\varphi) * \frac{g_x}{g} \quad (18)$$

Les erreurs angulaires $\delta_\theta, \delta_\varphi$ sont ensuite utilisées pour compenser en amont les estimées des angles d'attitude $(\theta, \varphi)$.

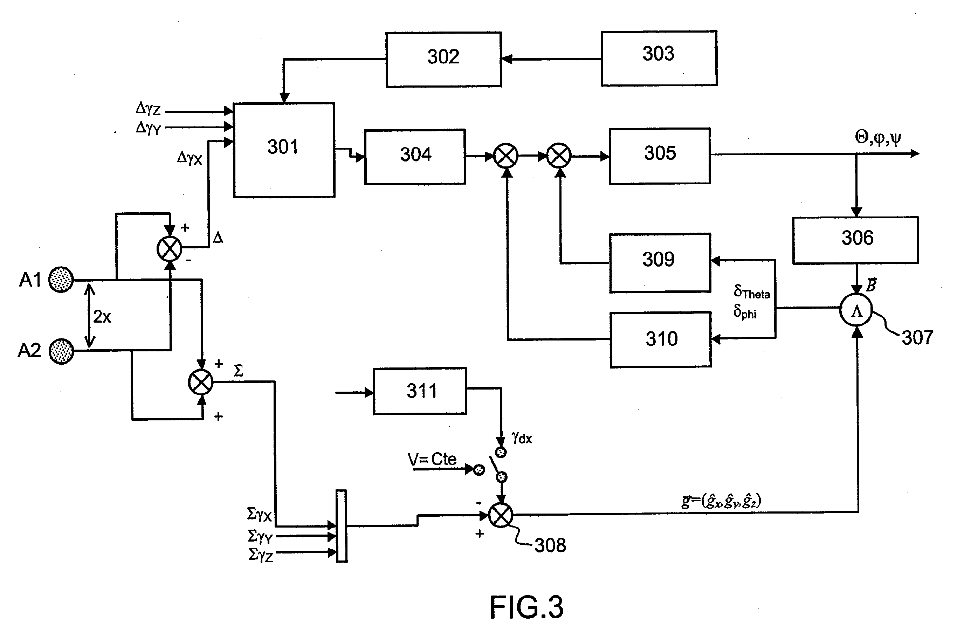

Un synoptique de la chaine globale d'estimation des angles d'attitude avec calibration des accéléromètres et compensation des dérives à long terme impactant lesdits angles est représenté à la figure 3.

A partir des mesures absolues délivrées par le couple d'accéléromètres (A1,A2) séparés, sur l'axe x, d'une distance $x_1 + x_2$, une mesure d'accélération différentielle $\Delta\gamma_x$, est produite. De façon similaire, à partir des couples d'accéléromètres (A3,A4) et (A5,A6), les mesures d'accélérations différentielles $\Delta\gamma_y, \Delta\gamma_z$ sont produites. Des premiers moyens de calcul 301 déterminent, à partir des mesures différentielles $\Delta\gamma_x, \Delta\gamma_y, \Delta\gamma_z$, une estimée des dérivées secondes des angles d'attitude qui forment une estimée de l'accélération angulaire $\vec{\ddot{\Omega}}_a(t)$ du porteur. Alternativement, la dérivée seconde de l'angle de cap peut être déterminée à l'aide d'un gyromètre comme détaillé précédemment. Des premiers moyens d'intégration 304 produisent, à partir de l'accélération angulaire $\vec{\ddot{\Omega}}_a(t)$, une estimée du vecteur des vitesses angulaires ou incréments (p,q,r). Des seconds moyens d'intégration 305 déterminent enfin, à partir desdits incréments (p,q,r), une estimée des angles d'attitude.

Dans une première variante de réalisation de l'invention précédemment décrite, les accéléromètres sont calibrés au moyen d'une compensation des biais de mesure déterminés à partir d'une estimée non biaisée des angles d'attitude, fournie par une référence externe 303, par exemple une centrale inertielle de référence. Des moyens de calcul 302 déterminent la dérivée seconde de ladite estimation non biaisée puis le biais différentiel et l'erreur moyenne impactant chaque angle d'attitude. L'erreur est ensuite compensée directement sur l'estimée de l'accélération angulaire $\vec{\ddot{\Omega}}_a(t)$ déterminée par les moyens 301.

Dans une seconde variante de réalisation de l'invention précédemment décrite, une estimée de l'accélération du porteur est réalisée à partir de la moyenne, $\Sigma\gamma_x, \Sigma\gamma_y, \Sigma\gamma_z$, des mesures délivrées par chaque couple d'accéléromètres appariés. Lesdites estimées sont corrigées 308 par une mesure externe 311 des accélérations dynamique axiales, selon les axes x,y,z, lorsque la vitesse de l'aéronef est supposée variable. Avantageusement, une compensation unique de la composante de l'accélération dynamique selon l'axe vertical x est suffisante pour des conditions de vol standard. A partir des angles d'attitude déterminés en sortie des moyens d'intégration 305, le vecteur $\vec{B}$, orthogonal au plan de l'assiette défini par les angles de tangage et de roulis, est construit par des moyens de calcul 306. Une estimée de l'erreur angulaire $\delta_\theta, \delta_\varphi$ impactant, à long terme, les angles de tangage et de roulis est ensuite calculée comme le résultat du produit vectoriel 307 normé entre le vecteur $\vec{B}$ et le vecteur représentant la mesure d'accélération du porteur obtenue à partir des moyennes $\Sigma\gamma_x, \Sigma\gamma_y, \Sigma\gamma_z$.

Une boucle de contrôle 309,310 est enfin réalisée pour compenser les erreurs angulaires sur les estimées en sortie des premiers moyens d'intégration 304. Des moyens de contrôle proportionnel 309 permettent de corriger les erreurs à court terme liées au bruit impactant les mesures en sortie des capteurs. Des moyens de contrôle intégral 310 permettent de corriger les erreurs à long terme entrainant des phénomènes de dérive angulaire.

Un avantage de l'exploitation de la sommation des mesures délivrées par les couples d'accéléromètres réside dans le fait qu'ainsi il est possible de compenser la dérive à long terme des estimées angulaires obtenues par différentiation desdites mesures qui elles sont précises à court terme.

## Revendications

1. Procédé de détermination, par un système inertiel, d'une mesure de l'attitude d'un aéronef (100) consistant au moins à déterminer l'angle de tangage $\theta$ et/ou l'angle de cap $\psi$ et/ou l'angle de roulis $\varphi$ dudit aéronef (100), chacun desdits angles d'attitude étant déterminé par double intégration successive de leur dérivée seconde, ladite dérivée seconde étant déterminée comme la différence entre les mesures d'accélérations délivrées par deux accéléromètres appariés ((A1,A2),(A3,A4),(A5,A6)) divisée par la somme des distances respectives $((x_1,x_2),(z_1,z_2),(y_1,y_2))$ entre lesdits accéléromètres et le centre de gravité G dudit système inertiel, le couple d'accéléromètres (A1,A2) utilisé pour la détermination de l'angle de tangage $\theta$ étant disposé de part et d'autre du centre de gravité G le long d'un axe x sensiblement confondu avec l'axe longitudinal de l'aéronef (100), le couple d'accéléromètres (A5,A6) utilisé pour la détermination de l'angle de cap $\psi$ étant disposé de part et d'autre du centre de gravité G le long d'un axe y sensiblement confondu avec l'axe transversal de l'aéronef (100), le couple d'accéléromètres (A3,A4) utilisé pour la détermination de l'angle de roulis $\varphi$ étant disposé de part et d'autre du centre de gravité G le long d'un axe z vertical perpendicutaire au plan formé par les axes x et y, ledit procédé étant **caractérisé en ce qu'**il consiste en outre à compenser les erreurs de calibrage des dits accéléromètres ((A1,A2),(A3,A4),(A5,A6)) en corrigeant la dérivée seconde du/des angle(s) d'attitude $\theta$, $\psi$, $\varphi$, par un biais différentiel $\overline{\Delta}_{x21}$ divisé par la somme des distances respectives $((x_1,x_2),(z_1,z_2),(y_1,y_2))$ entre les accéléromètres et le centre de gravité G dudit système inertiel, ledit biais différentiel $\overline{\Delta}_{x21}$ étant déterminé à partir de l'intégration, sur une durée T donnée, de la différence entre d'une part, la différence entre les mesures d'accélération délivrées par le couple d'accéléromètres appariés et d'autre part, une estimée non biaisée de la dérivée seconde de l'angle d'attitude $\theta$, $\psi$, $\varphi$ que multiplie la somme desdites distances $((x_1,x_2),(z_1,z_2),(y_1,y_2))$.

2. Procédé selon la revendication 1 **caractérisé en ce que** la mesure de l'attitude de l'aéronef (100) est utilisée comme information de secours en support d'un système de navigation de référence.

3. Procédé selon la revendication 2 **caractérisé en ce que** ledit système de navigation de référence délivre l'estimée non biaisée de la dérivée seconde du ou des angles d'attitude.

4. Procédé selon l'une des revendications précédentes **caractérisé en ce qu'**il consiste en outre à corriger les dérives à long terme impactant lesdites mesures d'attitude en déterminant au moins une compensation $\delta_\theta$ de l'angle de tangage et/ou une compensation $\delta_\varphi$ de l'angle de roulis, lesdites compensations $\delta_\theta,\delta_\varphi$ étant déterminées à partir de la comparaison du vecteur $\vec{B}$, orthogonal au plan de l'assiette défini par les angles de tangage $\theta$ et de roulis $\varphi$ et du vecteur accélération $\vec{g}$ de l'aéronef (100) soumis à la gravité terrestre, ledit vecteur $\vec{g}$ étant déterminé comme l'accélération gravimétrique de l'aéronef (100) en son centre de gravité G, à partir de la moyenne des mesures d'accélérations délivrées par deux accéléromètres appariés ((A1,A2),(A3,A4),(A5,A6)), les distances respectives $((x_1,x_2),(z_1,z_2),(y_1,y_2))$ entre deux accéléromètres d'un même couple et le centre de gravité G dudit système inertiel étant fixées égales entre elles.

5. Procédé selon la revendication 4 **caractérisé en ce qu'**il consiste en outre à compenser ledit vecteur accélération $\vec{g}$ par une estimée $\vec{\gamma}_d$ de l'accélération dynamique de l'aéronef (100).

6. Système de navigation inertiel, embarqué sur un aéronef (100), **caractérisé en ce qu'**il comporte au moins un couple d'accéléromètres appariés (A1,A2) disposés le long d'un axe x sensiblement confondu avec l'axe longitudinal dudit aéronef (100), de part et d'autre du centre de gravité G dudit système inertiel et à une distance respective $x_1,x_2$ de celui-ci, les axes sensibles desdits accéléromètres (A1,A2) étant disposés sensiblement parallèles entre eux et perpendiculaires à l'axe x, ledit système inertiel comportant en outre des moyens de calcul reliés audit premier couple (A1,A2) et adaptés à mettre en oeuvre le procédé de détermination de l'angle de tangage $\theta$ dudit aéronef (100) selon l'une des revendications 1 à 3.

7. Système de navigation inertiel selon la revendication 6 **caractérisé en ce qu'**il comporte en outre un deuxième couple d'accéléromètres appariés (A3,A4) disposés le long d'un axe z vertical et perpendiculaire, au point G, à l'axe x, de part et d'autre dudit point G et à une distance respective $z_1,z_2$ de celui-ci, les axes sensibles desdits accéléromètres (A3,A4) étant disposés sensiblement parallèles entre eux et perpendiculaires à l'axe z, ledit système inertiel comportant en outre des moyens de calcul reliés audit deuxième couple (A3,A4) et adaptés à mettre en oeuvre le procédé de détermination de l'angle de roulis $\varphi$ dudit aéronef (100) selon l'une des revendications 1 à 3.

8. Système de navigation inertiel selon l'une des revendications 6 ou 7 **caractérisé en ce qu'**il comporte en outre un gyromètre (200) disposé sensiblement au point G et orienté selon un axe z vertical et perpendiculaire, au point G, à l'axe x, ledit gyromètre (200) étant adapté à délivrer une estimée de l'angle de cap $\psi$ dudit aéronef (100).

9. Système de navigation inertiel selon l'une des revendications 6 ou 7 **caractérisé en ce qu'**il comporte en outre un troisième couple d'accéléromètres appariés (A5,A6) disposés le long d'un axe y sensiblement confondu avec l'axe transversal dudit aéronef (100) et perpendiculaire au point G, à l'axe x, de part et d'autre dudit point G et à une distance respective $y_1,y_2$ de celui-ci, les axes sensibles desdits accéléromètres (A5,A6) étant disposés sensiblement parallèles entre eux et perpendiculaires à l'axe y, ledit système inertiel comportant en outre des moyens de calcul reliés au moins audit troisième couple (A5,A6) et adaptés à mettre en oeuvre le procédé de détermination des angles d'attitude dudit aéronef (100) selon l'une des revendications 1 à 5.

10. Système de navigation inertiel selon l'une des revendications 6 à 9 **caractérisé en ce qu'**il constitue un système de navigation de secours en support d'un système de navigation primaire embarqué sur ledit aéronef (100).

## Patentansprüche

1. Verfahren zum Ermitteln, durch ein Trägheitssystem, eines Messwertes der Lage eines Luftfahrzeugs (100), das wenigstens das Ermitteln des Nickwinkels $\theta$ und/oder des Kurswinkels $\psi$ und/oder des Rollwinkels $\varphi$ des Luftfahrzeugs (100) beinhaltet, wobei jeder der Lagewinkel durch eine aufeinander folgende Doppelintegration seiner zweiten Ableitung ermittelt wird, wobei die zweite Ableitung als die Differenz zwischen den von zwei übereinstimmenden Beschleunigungsmessern ((A1, A2), (A3, A4), (A5, A6)) geliegerten Beschleunigungsmesswerten dividiert durch die Summe der jeweiligen Distanzen ($(x_1, x_2)$, $(z_1, z_2)$, $(y_1, y_2)$) zwischen den Beschleunigungsmessern und dem Schwerpunkt G des Trägheitssystems ermittelt wird, wobei das zum Ermitteln des Nickwinkels $\theta$ benutzte Paar Beschleunigungsmesser (A1, A2) auf beiden Seiten des Schwerpunkts G entlang einer Achse x im Wesentlichen koinzident mit der Längsachse des Luftfahrzeugs (100) angeordnet ist, wobei das zum Ermitteln des Kurswinkels $\psi$ verwendete Paar Beschleunigungsmesser (A5, A6) auf beiden Seiten des Schwerpunkts G entlang einer Achse y im Wesentlichen konzident mit der Querachse des Luftfahrzeugs (100) angeordnet ist, wobei das zum Ermitteln des Rollwinkels $\varphi$ verwendete Paar Beschleunigungsmesser (A3, A4) auf beiden Seiten des Schwerpunkts G entlang einer vertikalen Achse z lotrecht zu der von den Achsen x und y gebildeten Ebene angeordnet ist, wobei das Verfahren **dadurch gekennzeichnet ist, dass** es ferner das Kompensieren von Kalibrierungsfehlern der Beschleunigungsmesser ((A1, A2), (A3, A4), (A5, A6)) durch Korrigieren der zweiten Ableitung des/der Lagewinkel(s) $\theta$, $\psi$, $\varphi$ durch ein Differentialgefälle $\overline{\Delta}_{x21}$ dividiert durch die Summe der jeweiligen Distanzen ($(x_1, x_2)$, $(z_1, z_2)$, $(y_1, y_2)$) zwischen den Beschleunigungsmessern und dem Schwerpunkt G des Trägheitssystems beinhaltet, wobei das Differentialgefälle $\overline{\Delta}_{x21}$ auf der Basis der Integration, über eine gegebene Dauer T, der Differenz zwischen den von dem übereinstimmenden Paar Beschleunigungsmesser zugeführten Beschleunigungsmesswerten einerseits und einer gefällefreien Schätzung der zweiten Ableitung des Lagewinkels $\theta$, $\psi$, $\varphi$, die die Summe der Distanzen ($(x_1, x_2)$, $(z_1, z_2)$, $(y_1, y_2)$) multipliziert, andererseits ermittelt wird.

2. Verfahren nach Anspruch 1, **dadurch gekennzeichnet, dass** der Messwert der Lage des Luftfahrzeugs (100) als Reserveinformation zum Unterstützen eines Referenznavigationssystems verwendet wird.

3. Verfahren nach Anspruch 2, **dadurch gekennzeichnet, dass** das Referenznavigationssystem eine gefällefreie Schätzung der zweiten Ableitung des oder der Lagewinkel(s) liefert.

4. Verfahren nach einem der vorherigen Ansprüche, **dadurch gekennzeichnet, dass** es ferner das Korrigieren der die Lagemesswerte beeinflussenden langfristigen Ableitungen durch Ermitteln von wenigstens einer Kompensation $\delta_\theta$ des Nickwinkels und/oder einer Kompensation $\delta_\varphi$ des Rollwinkels beinhaltet, wobei die Kompensationen $\delta_\theta$, $\delta_\varphi$ auf der Basis des Vergleichs des Vektors $\vec{B}$ orthogonal zur Ebene der Trimmung, definiert durch den Nickwinkel $\theta$

und den Rollwinkel φ, mit dem Beschleunigungsvektor $\vec{g}$ des Luftfahrzeugs (100) unter der Wirkung der Erdanziehung ermittelt werden, wobei der Vektor $\vec{g}$ als gravimetrische Beschleunigung des Luftfahrzeugs (100) an seinem Schwerpunkt G auf der Basis des Mittels der von zwei übereinstimmenden Beschleunigungsmessern ((A1, A2), (A3, A4), (A5, A6)) gelieferten Beschleunigungsmesswerte ermittelt wird, wobei die jeweiligen Distanzen ((x_1, x_2), (z_1, z_2), (y_1, y_2)) zwischen zwei Beschleunigungsmessern eines selben Paares und dem Schwerpunkt G des Trägheitssystems einander gleich gesetzt werden.

5. Verfahren nach Anspruch 4, **dadurch gekennzeichnet, dass** es ferner das Kompensieren des Beschleunigungsvektors $\vec{g}$ durch eine Schätzung $\vec{\gamma}_d$ der dynamischen Beschleunigung des Luftfahrzeugs (100) beinhaltet.

6. Trägheitsnavigationssystem an Bord eines Luftfahrzeugs (100), **dadurch gekennzeichnet, dass** es wenigstens ein Paar übereinstimmende Beschleunigungsmesser (A1, A2) umfasst, die entlang einer Achse x im Wesentlichen koinzident mit der Längsachse des Luftfahrzeugs (100) auf beiden Seiten des Schwerpunkts G des Trägheitssystems und in einer jeweiligen Distanz $x_1$, $x_2$ davon angeordnet sind, wobei die empfindlichen Achsen der Beschleunigungsmesser (AI, A2) im Wesentlichen parallel zueinander und lotrecht zur Achse x angeordnet sind, wobei das Trägheitssystem ferner Rechenmittel umfasst, die mit dem ersten Paar (A1, A2) verbunden und so ausgelegt sind, dass sie das Verfahren zum Ermitteln des Nickwinkels θ des Luftfahrzeugs (100) nach einem der Ansprüche 1 bis 3 implementiert.

7. Trägheitsnavigationssystem nach Anspruch 6, **dadurch gekennzeichnet, dass** es ferner ein zweites Paar übereinstimmende Beschleunigungsmesser (A3, A4) umfasst, die entlang einer vertikalen Achse z und am Punkt G lotrecht zur Achse x auf beiden Seiten des Punkts G und in einer jeweiligen Distanz $z_1$, $z_2$ davon angeordnet sind, wobei die empfindlichen Achsen der Beschleunigungsmesser (A3, A4) im Wesentlichen parallel zueinander und lotrecht zur Achse z angeordnet sind, wobei das Trägheitssystem ferner Rechenmittel umfasst, die mit dem zweiten Paar (A3, A4) verbunden und zum Ausführen des Verfahrens zum Ermitteln des Rollwinkels φ des Luftfahrzeugs (100) nach einem der Ansprüche 1 bis 3 ausgelegt sind.

8. Trägheitsnavigationssystem nach Anspruch 6 oder 7, **dadurch gekennzeichnet, dass** es ferner ein Gyrometer (200) umfasst, das im Wesentlichen am Punkt G angeordnet und entlang einer vertikalen Achse z und am Punkt G lotrecht zur Achse x orientiert ist, wobei das Gyrometer (200) zum Liefern einer Schätzung des Kurswinkels ψ des Luftfahrzeugs (100) ausgelegt ist.

9. Trägheitsnavigationssystem nach Anspruch 6 oder 7, **dadurch gekennzeichnet, dass** es ferner ein drittes Paar übereinstimmende Beschleunigungsmesser (A5, A6) umfasst, die entlang einer Achse y im Wesentlichen koinzident mit der Querachse des Luftfahrzeugs (100) und am Punkt G lotrecht zur Achse x auf beiden Seiten des Punkts G und in einer jeweiligen Distanz $y_1$, $y_2$ davon angeordnet ist, wobei die empfindlichen Achsen der Beschleunigungsmesser (A5, A6) im Wesentlichen parallel zueinander und lotrecht zur Achse y angeordnet sind, wobei das Trägheitssystem ferner Rechenmittel umfasst, die mit dem dritten Paar (A5, A6) verbunden und zum Ausführen des Verfahrens zum Ermitteln der Lagewinkel des Luftfahrzeugs (100) nach einem der Ansprüche 1 bis 5 ausgelegt ist.

10. Trägheitsnavigationssystem nach einem der Ansprüche 6 bis 9, **dadurch gekennzeichnet, dass** es ein Reservenavigationssystem zum Unterstützen eines primären Navigationssystems an Bord des Luftfahrzeugs (100) bildet.

**Claims**

1. A method for determining, via an inertial system, a measurement of the attitude of an aircraft (100) comprising at least determining the angle of pitch θ and/or the angle of heading ψ and/or the angle of roll φ of said aircraft (100), each of said angles of attitude being determined by successive double-integration of their second derivative, said second derivative being determined as the difference between the acceleration measurements delivered by two matched accelerometers ((A1, A2), (A3, A4), (A5, A6)) divided by the sum of the respective distances ((x_1, x_2), (z_1, z_2), (y_1, y_2)) between said accelerometers and the centre of gravity G of said inertial system, with the pair of accelerometers (A1, A2) used to determine the angle of pitch θ being disposed either side of the centre of gravity G along an axis x substantially coincident with the longitudinal axis of said aircraft (100), with the pair of accelerometers (A5, A6) used to determine the angle of heading ψ being disposed either side of the centre of gravity G along an axis y substantially coincident with the transverse axis of said aircraft (100), with the pair of accelerometers (A3, A4) used to determine the angle of roll φ being disposed either side of the centre of gravity G along a vertical axis z perpendicular to the plane formed by the axes x and y, said method being **characterised in that** it further comprises compensating for the calibration errors of said accelerometers ((A1, A2), (A3, A4), (A5, A6)) by correcting the second derivative of the one or more angles of attitude $\theta$, $\psi$, $\varphi$ by a differential bias $\overline{\Delta}_{x21}$ divided by the sum of the respective distances $((x_1, x_2), (z_1, z_2), (y_1, y_2))$ between said accelerometers and the centre of gravity G of said inertial system, said differential bias $\overline{\Delta}_{x21}$ being determined on the basis of the integration, over a given duration T, of the difference between the acceleration measurements delivered by the pair of matched accelerometers on the one hand and a non-biased estimate of the second derivative of the angle of attitude $\theta$, $\psi$, $\varphi$ that multiplies the sum of said distances $((x_1, x_2), (z_1, z_2), (y_1, y_2))$ on the other hand.

2. The method according to claim 1, **characterised in that** the measurement of the attitude of said aircraft (100) is used as backup information to support a reference navigation system.

3. The method according to claim 2, **characterised in that** said reference navigation system delivers the non-biased estimate of the second derivative of the one or more angles of attitude.

4. The method according to any one of the preceding claims, **characterised in that** it further comprises correcting the long-term derivatives affecting said attitude measurements by determining at least a compensation $\delta_\theta$ of the angle of pitch and/or a compensation $\delta_\varphi$ of the angle of roll, said compensations $\delta_\theta$, $\delta_\varphi$ being determined on the basis of the comparison of the vector $\vec{B}$, orthogonal to the plane of the trim defined by the angles of pitch $\theta$ and roll $\varphi$ and by the acceleration vector $\vec{g}$ of said aircraft (100) subject to terrestrial gravity, said vector $\vec{g}$ being determined as the gravimetric acceleration of said aircraft (100) at its centre of gravity G on the basis of the average of the acceleration measurements delivered by two matched accelerometers ((A1, A2), (A3, A4), (A5, A6)), with the respective distances $((x_1, x_2), (z_1, z_2), (y_1, y_2))$ between two accelerometers of the same pair and the centre of gravity G of said inertial system being set as equal to each other.

5. The method according to claim 4, **characterised in that** it further comprises compensating said acceleration vector $\vec{g}$ by an estimate $\vec{\gamma}_d$ of the dynamic acceleration of said aircraft (100).

6. An inertial navigation system, on board an aircraft (100), **characterised in that** it comprises at least one pair of matched accelerometers (A1, A2) disposed along an axis x substantially coincident with the longitudinal axis of said aircraft (100), either side of the centre of gravity G of said inertial system and at a respective distance $x_1$, $x_2$ therefrom, with the sensitive axes of said accelerometers (A1, A2) being disposed substantially parallel to each other and perpendicular to the axis x, said inertial system further comprising computing means connected to said first pair (A1, A2) and designed to implement the method for determining the angle of pitch $\theta$ of said aircraft (100) according to any one of claims 1 to 3.

7. The inertial navigation system according to claim 6, **characterised in that** it further comprises a second pair of matched accelerometers (A3, A4) disposed along a vertical axis z and perpendicular, at the point G, to the axis x, either side of said point G and at a respective distance $z_1$, $z_2$ therefrom, with the sensitive axes of said accelerometers (A3, A4) being disposed substantially parallel to each other and perpendicular to the axis z, said inertial system further comprising computing means connected to said second pair (A3, A4) and designed to implement the method for determining the angle of roll $\varphi$ of said aircraft (100) according to any one of claims 1 to 3.

8. The inertial navigation system according to claim 6 or 7, **characterised in that** it further comprises a gyrometer (200) substantially disposed at the point G and oriented along a vertical axis z and perpendicular, at the point G, to the axis x, said gyrometer (200) being designed to deliver an estimate of the angle of heading $\psi$ of said aircraft (100).

9. The inertial navigation system according to claim 6 or 7, **characterised in that** it further comprises a third pair of matched accelerometers (A5, A6) disposed along an axis y substantially coincident with the transverse axis of said aircraft (100) and perpendicular, at the point G, to the axis x, either side of the point G and at a respective distance $y_1$, $y_2$ therefrom, with the sensitive axes of said accelerometers (A5, A6) being disposed substantially parallel to each other and perpendicular to the axis y, said inertial system further comprising computing means connected to said third pair (A5, A6) and designed to implement the method for determining the angles of attitude of said aircraft (100) according to any one of claims 1 to 5.

10. The inertial navigation system according to any one of claims 6 to 9, **characterised in that** it forms a backup navigation system for supporting a primary navigation system on board said aircraft (100).

EP 2 495 530 B1

FIG.1

FIG.2

15

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0116561
- GB 2146776 A
- FR 2107847
- EP 0621482 A

**Littérature non-brevet citée dans la description**

- **AKEILA E et al.** Direct gravity estimation and compensation in strapdown INS applications. *Sensing Technology, 2008, ICST 2008, 3rd international conference,* 30 Novembre 2008